# EUROPEAN PATENT APPLICATION

(11) **EP 4 661 366 A1**
(43) Date of publication of application: **10.12.2025**
(21) Application number: 23925052.5
(22) Date of filing: 06.12.2023
(51) Int. Cl.: H04L 45/24

(54) **ROUTE ADVERTISEMENT METHOD AND RELATED APPARATUS**

(30) Priority: 28.02.2023 CN 202310232078
(71) Applicant: Huawei Technologies Co., Ltd., Shenzhen, Guangdong 518129 (CN)
(72) Inventor: DONG, Jiajia, Shenzhen, Guangdong 518129 (CN); HU, Zhibo, Shenzhen, Guangdong 518129 (CN)
(74) Representative: Isarpatent
(86) International application number: PCT/CN2023/136684
(87) International publication number: WO 2024/179107

(57) **Abstract**

Embodiments of this application disclose a route advertisement method and a related apparatus, to avoid a packet loss caused by introduction of an aggregated route. The method according to embodiments of this application includes: A first network device determines that a first route to a second network device is unreachable. The first network device sends routing information to a third network device according to BGP, where the routing information indicates that the first route is unreachable, to enable the third network device to generate the first route and mark the first route as an unreachable route.

## Description

This application claims priority to Chinese Patent Application No. CN202310232078.5, filed with the China National Intellectual Property Administration on February 28, 2023 and entitled "ROUTE ADVERTISEMENT METHOD AND RELATED APPARATUS", which is incorporated herein by reference in its entirety.

### TECHNICAL FIELD

Embodiments of this application relate to the computer field, and in particular, to a route advertisement method and a related apparatus.

### BACKGROUND

With development of communication technologies, a communication network has an increasing scale, leading to an increase in an amount of data in a routing information base (routing information base, RIB) stored in a network device. To reduce the amount of data in the RIB, an aggregated route emerges. A plurality of specific routes are aggregated into one aggregated route, so that the aggregated route can correspond to one network segment rather than one network device. This effectively reduces the amount of data in the RIB.

However, after the aggregated route is introduced, in some scenarios, a severe packet loss occurs in a data packet forwarding process.

### SUMMARY

This application provides a route advertisement method and a related apparatus, to avoid a packet loss caused by introduction of an aggregated route.

A first aspect of this application provides a route advertisement method.

In a cross-AS domain L3VPN over SRv6 scenario, if a first network device determines that a first route to a second network device is unreachable, the first network device sends routing information to a third network device according to a border gateway protocol (border gateway protocol, BGP), where the routing information indicates that the first route is unreachable, to enable the third network device to generate the first route and mark the first route as an unreachable route.

In this application, when the first network device determines that the first route is unreachable, the first network device advertises, to the third network device in a timely manner, that the first route is unreachable, so that the third network device can change a forwarding policy in a timely manner, to avoid a packet loss.

In a possible implementation, the first network device sends a BGP packet to the third network device, where the BGP packet carries the routing information.

In this application, the first network device directly sends the BGP packet to the third network device, to improve communication efficiency.

In a possible implementation, the first network device sends a BGP packet to a fourth network device, to enable the fourth network device to send an interior gateway protocol (Interior Gateway Protocol, IGP) packet to the third network device, where the BGP packet and the IGP packet carry the routing information.

In this application, the first network device indicates, based on the BGP packet, the fourth network device to send the IGP packet to the third network device, to improve communication reliability in a specific scenario.

In a possible implementation, the first network device and the fourth network device are autonomous system border routers (autonomous system border routers, ASBRs), and the second network device and the third network device are provider edge (provider edge, PE) routers.

In a possible implementation, the BGP packet carries the first route and indication information, where the indication information indicates that the first route is unreachable.

In this application, a standard BGP packet is extended, so that the BGP packet can indicate that the first route is unreachable, to improve communication reliability.

In a possible implementation, the third network device generates an aggregated route, a network segment corresponding to the first route is a sub-network segment of a network segment corresponding to the aggregated route, and the first route is a locator prefix network segment or a target prefix network segment for establishing a BGP peer.

In this application, because the third network device learns the aggregated route, if a fault occurs on the second network device, the third network device still considers, based on the aggregated route, that the second network device can still provide a packet forwarding service. Therefore, the first route of the third network device is indicated as unreachable, so that a packet loss problem can be effectively resolved.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In this application, a standard BGP packet is extended, so that the BGP packet can indicate that the first route is unreachable, to improve communication reliability.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field.

In this application, a standard BGP packet is extended, so that the BGP packet can indicate that the first route is unreachable, to improve communication reliability.

In a possible implementation, the BGP packet is an update packet, the update packet includes an MP_REACH_NLRI field, the first route is carried in an NLRI field in the MP_REACH_NLRI field, and the indication information is carried in a next hop field in the MP_REACH_NLRI field.

In this application, a standard BGP packet is extended, so that the BGP packet can indicate that the first route is unreachable, to improve communication reliability.

In a possible implementation, the BGP packet is an update packet, the update packet includes an MP_REACH_NLRI field, the first route is carried in an NLRI field in the MP_REACH_NLRI field, and the indication information is carried in an attribute type field in a path attribute in the update packet.

In this application, a standard BGP packet is extended, so that the BGP packet can indicate that the first route is unreachable, to improve communication reliability.

In a possible implementation, the BGP packet is an update packet, the update packet includes an MP_UNREACH_NLRI field, the first route is carried in an NLRI field in the MP_UNREACH_NLRI field, and the indication information is carried in an attribute type field in a path attribute in the update packet.

In this application, a standard BGP packet is extended, so that the BGP packet can indicate that the first route is unreachable, to improve communication reliability.

In a possible implementation, the third network device generates the first route in a forwarding table, and marks the first route as unreachable in the forwarding table.

In this application, the third network device directly marks the first route as unreachable in the forwarding table, to increase a route switching speed.

A second aspect of this application provides a route advertisement method.

In a cross-AS domain L3VPN over SRv6 scenario, a third network device obtains routing information sent by a first network device according to BGP, where the routing information indicates that a first route to a second network device is unreachable. The third network device generates the first route based on the routing information, and marks the first route as unreachable.

In this application, if the first route is unreachable, the first network device advertises, to the third network device in a timely manner, that the first route is unreachable, so that the third network device can change a forwarding policy in a timely manner, to avoid a packet loss.

In a possible implementation, the first route is a locator prefix network segment. The third network device further matches the first route with a virtual private network segment identifier VPN SID in a forwarding entry advertised by the second network device for a private network route, and determines, based on the first route being unreachable, that the VPN SID is unreachable, to trigger an operation of switching the forwarding entry from a primary forwarding entry to a secondary forwarding entry.

In this application, the third network device determines, based on the first route being unreachable, that the VPN SID in the forwarding entry advertised by the second network device for the private network route is also unreachable, to trigger the operation of switching between the primary forwarding entry and the secondary forwarding entry, so as to avoid a packet loss.

In a possible implementation, the first route is a target prefix network segment for establishing a BGP peer. The third network device matches the first route with the target prefix network segment in a forwarding entry advertised by the second network device for a private network route, and determines, based on the first route being unreachable, that the target prefix network segment is unreachable, to trigger an operation of switching the forwarding entry from a primary forwarding entry to a secondary forwarding entry.

In this application, the third network device determines, based on the first route being unreachable, that the target prefix network segment in the forwarding entry advertised by the second network device for the private network route is also unreachable, to trigger the operation of switching between the primary forwarding entry and the secondary forwarding entry, so as to avoid a packet loss.

In a possible implementation, the third network device obtains a BGP packet sent by the first network device, where the BGP packet carries the routing information.

In this application, the first network device directly sends the BGP packet to the third network device, to improve communication efficiency.

In a possible implementation, the third network device obtains an IGP packet sent by a fourth network device, where the IGP packet is sent by the fourth network device based on a BGP packet from the first network device, and the IGP packet and the BGP packet carry the routing information.

In this application, the first network device indicates, based on the BGP packet, the fourth network device to send the IGP packet to the third network device, to improve communication reliability in a specific scenario.

In a possible implementation, the BGP packet carries the first route and indication information, where the indication information indicates that the first route is unreachable.

In this application, a standard BGP packet is extended, so that the BGP packet can indicate that the first route is unreachable, to improve communication reliability.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In this application, a standard BGP packet is extended, so that the BGP packet can indicate that the first route is unreachable, to improve communication reliability.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field. In this application, a standard BGP packet is extended, so that the BGP packet can indicate that the first route is unreachable, to improve communication reliability.

In a possible implementation, the BGP packet is an update packet, the update packet includes an MP_REACH_NLRI field, the first route is carried in an NLRI field in the MP_REACH_NLRI field, and the indication information is carried in a next hop field in the MP_REACH_NLRI field.

In this application, a standard BGP packet is extended, so that the BGP packet can indicate that the first route is unreachable, to improve communication reliability.

In a possible implementation, the BGP packet is an update packet, the update packet includes an MP_REACH_NLRI field, the first route is carried in an NLRI field in the MP_REACH_NLRI field, and the indication information is carried in an attribute type field in a path attribute in the update packet.

In this application, a standard BGP packet is extended, so that the BGP packet can indicate that the first route is unreachable, to improve communication reliability.

In a possible implementation, the BGP packet is an update packet, the update packet includes an MP_UNREACH_NLRI field, the first route is carried in an NLRI field in the MP_UNREACH_NLRI field, and the indication information is carried in an attribute type field in a path attribute in the update packet.

In this application, a standard BGP packet is extended, so that the BGP packet can indicate that the first route is unreachable, to improve communication reliability.

In a possible implementation, the third network device generates the first route in a forwarding table, and marks the first route as unreachable in the forwarding table.

In this application, the third network device directly marks the first route as unreachable in the forwarding table, to increase a route switching speed.

A third aspect of this application provides a first network device. The first network device includes a determining unit and a sending unit.

The determining unit is configured to determine that a first route to a second network device is unreachable.

The sending unit is configured to send routing information to a third network device according to BGP, where the routing information indicates that the first route is unreachable, to enable the third network device to generate the first route and mark the first route as an unreachable route.

In a possible implementation,
the sending unit is specifically configured to send a BGP packet to the third network device, where the BGP packet carries the routing information.

In a possible implementation,
the sending unit is specifically configured to send a BGP packet to a fourth network device, to enable the fourth network device to send an IGP packet to the third network device, where the BGP packet and the IGP packet carry the routing information.

In a possible implementation, the first network device and the fourth network device are autonomous system border routers ASBRs, and the second network device and the third network device are provider edge PE routers.

In a possible implementation, the BGP packet carries the first route and indication information, where the indication information indicates that the first route is unreachable.

In a possible implementation, the third network device generates an aggregated route, a network segment corresponding to the first route is a sub-network segment of a network segment corresponding to the aggregated route, and the first route is a locator prefix network segment or a target prefix network segment for establishing a BGP peer.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field.

In a possible implementation, the BGP packet is an update packet, the update packet includes an MP_REACH_NLRI field, the first route is carried in an NLRI field in the MP_REACH_NLRI field, and the indication information is carried in a next hop field in the MP_REACH_NLRI field.

In a possible implementation, the BGP packet is an update packet, the update packet includes an MP_REACH_NLRI field, the first route is carried in an NLRI field in the MP_REACH_NLRI field, and the indication information is carried in an attribute type field in a path attribute in the update packet.

In a possible implementation, the BGP packet is an update packet, the update packet includes an MP_UNREACH_NLRI field, the first route is carried in an NLRI field in the MP_UNREACH_NLRI field, and the indication information is carried in an attribute type field in a path attribute in the update packet.

In a possible implementation, the third network device generates the first route in a forwarding table, and marks the first route as unreachable in the forwarding table.

A fourth aspect of this application provides a third network device. The third network device includes an obtaining unit and a generating unit.

The obtaining unit is configured to obtain routing information sent by a first network device according to BGP, where the routing information indicates that a first route to a second network device is unreachable.

The generating unit is configured to: generate the first route based on the routing information, and mark the first route as unreachable.

In a possible implementation, the first route is a locator prefix network segment, and the third network device further includes a processing unit.

The processing unit is configured to: match the first route with a virtual private network segment identifier VPN SID in a forwarding entry advertised by the second network device for a private network route, and determine, based on the first route being unreachable, that the VPN SID is unreachable, to trigger an operation of switching the forwarding entry from a primary forwarding entry to a secondary forwarding entry.

In a possible implementation, the first route is a target prefix network segment for establishing a BGP peer, and the third network device further includes a processing unit.

The processing unit is configured to: match the first route with the target prefix network segment in a forwarding entry advertised by the second network device for a private network route, and determine, based on the first route being unreachable, that the target prefix network segment is unreachable, to trigger an operation of switching the forwarding entry from a primary forwarding entry to a secondary forwarding entry.

In a possible implementation,
the obtaining unit is specifically configured to obtain a BGP packet sent by the first network device, where the BGP packet carries the routing information.

In a possible implementation,
the obtaining unit is specifically configured to obtain an IGP packet sent by a fourth network device, where the IGP packet is sent by the fourth network device based on a BGP packet from the first network device, and the IGP packet and the BGP packet carry the routing information.

In a possible implementation, the BGP packet carries the first route and indication information, where the indication information indicates that the first route is unreachable.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field.

In a possible implementation, the BGP packet is an update packet, the update packet includes an MP_REACH_NLRI field, the first route is carried in an NLRI field in the MP_REACH_NLRI field, and the indication information is carried in a next hop field in the MP_REACH_NLRI field.

In a possible implementation, the BGP packet is an update packet, the update packet includes an MP_REACH_NLRI field, the first route is carried in an NLRI field in the MP_REACH_NLRI field, and the indication information is carried in an attribute type field in a path attribute in the update packet.

In a possible implementation, the BGP packet is an update packet, the update packet includes an MP_UNREACH_NLRI field, the first route is carried in an NLRI field in the MP_UNREACH_NLRI field, and the indication information is carried in an attribute type field in a path attribute in the update packet.

In a possible implementation, the third network device generates the first route in a forwarding table, and marks the first route as unreachable in the forwarding table.

A fifth aspect of this application provides a first network device.

The first network device includes a processor, where the processor is coupled to a memory, the memory is configured to store instructions, and when the instructions are executed by the processor, the first network device is enabled to perform the method according to the first aspect.

A sixth aspect of this application provides a third network device.

The third network device includes a processor, where the processor is coupled to a memory, the memory is configured to store instructions, and when the instructions are executed by the processor, a third network device is enabled to perform the method according to the second aspect.

A seventh aspect of this application provides a computer-readable storage medium. The computer-readable storage medium stores a computer program or instructions, and when the computer program or the instructions are executed, a computer is enabled to perform the method according to the first aspect or the second aspect.

An eighth aspect of this application provides a computer program product. The computer program product includes computer program code, and when the computer program code is run on a computer, the computer is enabled to implement the method according to the first aspect or the second aspect.

### BRIEF DESCRIPTION OF DRAWINGS

FIG. 1 is a diagram of a processing procedure on a control plane in an L3VPN over SRv6 scenario;
FIG. 2 is a diagram of another processing procedure on a control plane in an L3VPN over SRv6 scenario;
FIG. 3 is a schematic flowchart of a route advertisement method according to this application;
FIG. 4 is another diagram of a route advertisement method according to this application;
FIG. 5 is a diagram of MP_REACH_NLRI;
FIG. 6a is a diagram of MP_UNREACH_NLRI;
FIG. 6b is a diagram of an attribute type of a BGP path attribute;
FIG. 7 is another diagram of a route advertisement method according to this application;
FIG. 8 is a diagram of a structure of a first network device according to this application;
FIG. 9 is a diagram of a structure of a third network device according to this application; and
FIG. 10 is a diagram of another structure of a first network device or a third network device according to this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, the claims, and the accompanying drawings of this application, the terms "first", "second", and the like are intended to distinguish between similar objects but do not necessarily indicate a specific order or sequence. It should be understood that the data termed in such a way are interchangeable in appropriate circumstances, so that embodiments of described herein can be implemented in other orders than the order illustrated or described herein. In addition, the terms "include", "have", and any other variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

For ease of understanding of this application, the following first describes some content in this application.

Autonomous system (autonomous system, AS): In an internet, one autonomous system is a small unit that has authority to autonomously decide a type of routing protocol to be used in the system. The network unit may be a simple network or may be a network group controlled by one or more common network administrators, and is an independent and manageable network unit.

Customer edge (customer edge, CE) router: The customer edge router is a user-end router connected to a service provider. The CE is connected to one or more provider edge (provider edge, PE) routers to provide service access for a user. The CE is usually an IP router and establishes an adjacency with the connected PE.

PE: The PE is an edge router of a service provider network and is directly connected to a CE of a user. The PE implements all processing in a VPN in an MPLS network.

Border gateway protocol (border gateway protocol): The border gateway protocol is a routing protocol that is of an autonomous system and that runs over a TCP. The BGP is the only protocol for processing a network as large as an internet and the only protocol that can be used to appropriately handle a plurality of connections between unrelated routing domains. A main function of a BGP system is to exchange network reachability information with another BGP system.

Interior gateway protocol (interior gateway protocol, IGP): The interior gateway protocol is a protocol for routing information exchange between gateways in an autonomous network.

Autonomous system border router (autonomous system border router, ASBR): The autonomous system border router is a router that is connected to a network running at least one routing protocol and that exchanges routing information with a router running another protocol.

Segment routing IPv6 (segment routing IPv6, SRv6): The segment routing IPv6 is a protocol designed based on a source routing concept to forward an IPv6 data packet in a network. In SRv6 based on an IPv6 forwarding plane, an explicit IPv6 address stack is added to an IPv6 packet, and an operation of updating a destination address and an offset address stack is continuously performed via an intermediate node, to implement hop-by-hop forwarding. L3VPN over SRv6 means that an SRv6 LSP of a public network is used to carry IPv4 or IPv6 VPN private network data. Key implementation steps for an L3VPN over SRv6 LSP include SRv6 LSP establishment, VPN route interworking, data forwarding, and the like.

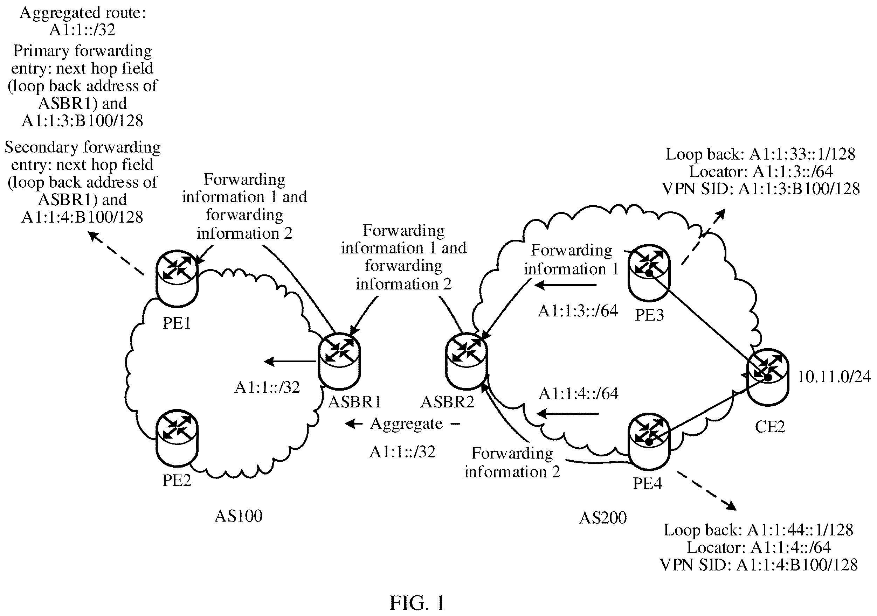

Refer to FIG. 1. In a cross-AS domain L3VPN over SRv6 scenario, CE1, PE1, PE2, ASBR1, ASBR2, PE3, PE4, and CE2 are included. CE1, PE1, PE2, and ASBR1 belong to AS100, and ASBR2, PE3, PE4, and CE2 belong to AS200. To implement an L3VPN over SRv6 service, a processing procedure on a control plane in the foregoing scenario is briefly described as follows.
A1. PE3 and PE4 perform private network route learning by running a routing protocol with CE2, and 10.1.1.0/24 is learned.
A2. PE3 converts 10.1.1.0/24 into a VPNv4 route, and advertises forwarding information 1 to ASBR2 according to BGP. The forwarding information 1 includes the VPNv4 route, a next hop field, and a VPN SID associated by PE3 for the VPNv4 route. The next hop field is a loop back address of PE3, that is, A1:1:33::1/128, and the VPN SID is A1:1:3:B100/128. Similarly, PE4 converts 10.1.1.0/24 into a VPNv4 route, and advertises forwarding information 2 to ASBR2 according to BGP. The forwarding information 2 includes the VPNv4 route, a next hop field, and a VPN SID associated by PE4 for the VPNv4 route. The next hop field is a loop back address of PE4, that is, A1:1:44::1/128, and the VPN SID is A1:1:4:B100/128.
A3. ASBR2 advertises the forwarding information from PE3 and PE4 to ASBR1 according to BGP. In this case, the next hop fields in the foregoing two pieces of forwarding information are both changed to a loop back address of ASBR2.
A4. ASBR1 advertises the two pieces of forwarding information to AS100. In this case, the next hop fields in the two pieces of forwarding information are both changed to a loop back address of ASBR1.
A5. Using PE1 as an example, after learning the foregoing two pieces of forwarding information, PE1 generates a primary forwarding entry and a secondary forwarding entry for 10.1.1.0/24. For example, the primary forwarding entry includes a next hop field and A1:1:3:B100/128, and the next hop field is the loop back address of ASBR1. The secondary forwarding entry includes a next hop field and A1:1:4:B100/128, and the next hop field is the loop back address of ASBR1. When receiving a data packet whose destination address is 10.1.0.1124, PE1 preferentially forwards the data packet based on the primary forwarding entry. To be specific, PE1 encapsulates A1:1:3:B100/128 in the primary forwarding entry into the data packet, and forwards the data packet from ASBR1.
A6. To ensure that A1:1:3:B100/128 and A1:1:4:B100/128 are routable in AS100, PE3 advertises a locator prefix network segment A1:1:3::/64 to ASBR2, PE4 advertises a locator prefix network segment A1:1:4::/64 to ASBR2, and ASBR2 aggregates the foregoing two locator prefix network segments into A1:1:3::/32 and advertises A1:1:3::/32 to AS100 through ASBR2. After learning A1:1:3::/32, PE1 stores A1:1:3::/32 in a public network routing table, can match A1:1:3:B100/128 in the primary forwarding entry with A1:1:3::/32 in a longest mask matching manner, and therefore, considers that A1:1:3:B100/128 has reachability. Similarly, PE1 can match A1:1:4:B100/128 in the secondary forwarding entry with A1:1:3::/32 in a longest mask matching manner, and therefore, considers that A1:1:4:B100/128 has reachability.

However, if a fault occurs on PE3 in a subsequent running process, the locator prefix network segment A1:1:3::/64 is changed to an unreachable route in AS200. However, the locator prefix network segment A1:1:3::/64 does not exist in AS100, and PE4 runs normally. Therefore, an aggregated route A1:1:3::/32 still exists, PE1 can still match A1:1:3:B100/128 with A1:1:3::/32 in the longest mask matching manner, and considers that A1:1:3:B100/128 still has reachability, to encapsulate A1:1:3:B100/128 into the data packet, resulting in a continuous packet loss.

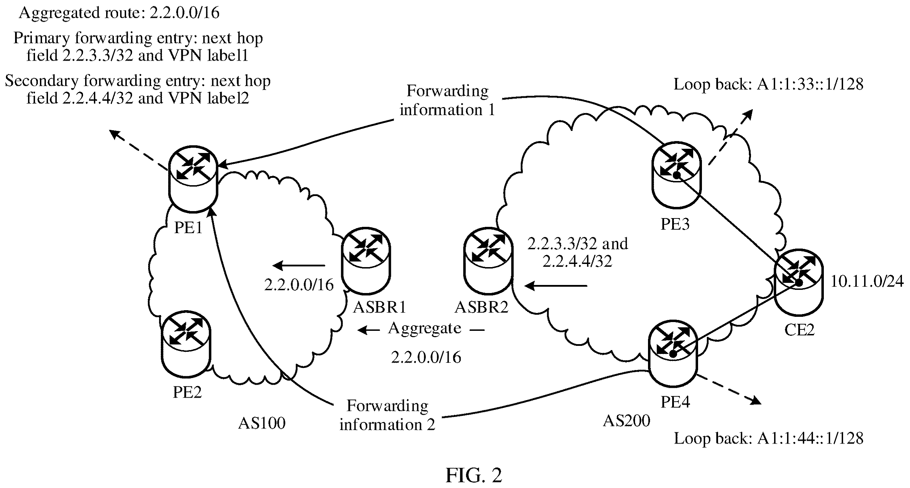

Refer to FIG. 2. In another cross-AS domain L3VPN over SRv6 scenario, CE1, PE1, PE2, ASBR1, ASBR2, PE3, PE4, and CE2 are also included. CE1, PE1, PE2, and ASBR1 belong to AS100, and ASBR2, PE3, PE4, and CE2 belong to AS200. To implement an L3VPN over SRv6 service, a processing procedure on a control plane in the foregoing scenario is briefly described as follows.
B1. PE3 and PE4 perform private network route learning by running a routing protocol with CE2, and 10.1.1.0/24 is learned.
B2. PE3 advertises forwarding information 1 to PE1 according to a multi-hop BGP. The forwarding information 1 includes a VPNv4 route into which PE3 converts 10.1.1.0/24, a next hop field that is a target prefix network segment used by PE3 to establish a BGP peer, and VPN label1. The target prefix network segment is, for example, a loop back address 2.2.3.3/32 of PE3. Similarly, PE4 also advertises forwarding information 2 to PE1 according to the multi-hop BGP. The forwarding information 2 includes a VPNv4 route into which PE4 converts 10.1.1.0/24, a next hop field that is a target prefix network segment used by PE4 to establish a BGP peer, and VPN label2. The target prefix network segment is, for example, a loop back address 2.2.4.4/32 of PE4. After learning the foregoing two pieces of forwarding information, PE1 generates a primary forwarding entry and a secondary forwarding entry for 10.1.1.0/24. For example, the primary forwarding entry includes 2.2.3.3/32 and VPN label1, and the secondary forwarding entry includes 2.2.4.4/32 and VPN label2.
B3. ASBR2 learns the loop back addresses of PE3 and PE4 according to an IGP protocol.
B4. ASBR2 aggregates the loop back addresses of PE3 and PE4 to obtain an aggregated route 2.2.0.0/16, and advertises the aggregated route to ASBR1 according to BGP.
B5. ASBR1 advertises the aggregated route to AS100 according to the IGP protocol, so that PE1 can learn the aggregated route. PE1 can match 2.2.3.3/32 in the primary forwarding entry with the aggregated route in a longest mask matching manner, and therefore, PE1 considers that 2.2.3.3/32 has reachability. Similarly, PE1 can match 2.2.4.4/32 in the secondary forwarding entry with the aggregated route in a longest mask matching manner, and therefore, PE1 considers that 2.2.4.4/32 has reachability.

However, if a fault occurs on PE3 in a subsequent running process and PE4 runs normally, the aggregated route 2.2.0.0/16 still exists in AS100, PE1 can still match 2.2.3.3/32 with 2.2.0.0/16 in the longest mask matching manner, and considers that 2.2.3.3/32 still has reachability, to encapsulate VPN label1 into a data packet, resulting in a continuous packet loss.

Embodiments of this application provide an unreachable route advertisement method and a related device, to avoid a packet loss caused by introduction of an aggregated route.

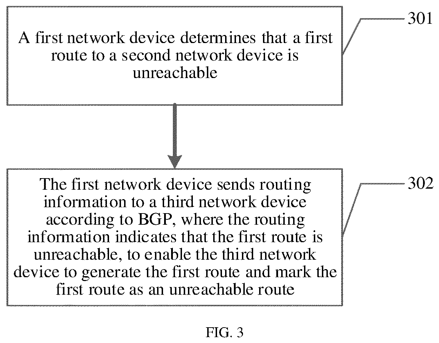

This application may be applied to a cross-AS L3VPN over SRv6 scenario, for example, the scenario shown in FIG. 1. Refer to FIG. 3. The following describes a procedure of the unreachable route advertisement method in this application.

301. A first network device determines that a first route to a second network device is unreachable.

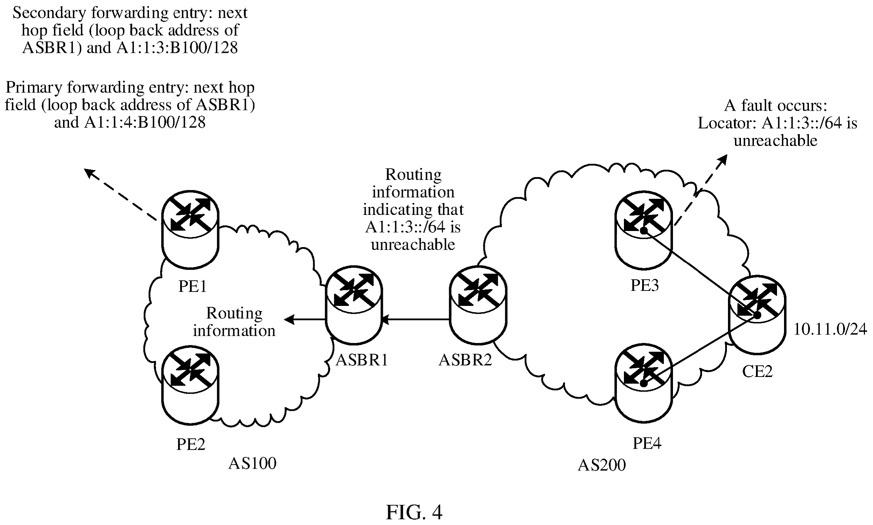

It should be noted that step 301 in this embodiment is performed after PE1 learns forwarding information advertised by PE3 and PE4 for a private network route 10.1.1.0/24 of CE2 and generates a primary forwarding entry and a secondary forwarding entry, for example, after the foregoing steps A1 to A6. Based on the scenario shown in FIG. 1, refer to FIG. 4. In this application, the first network device is ASBR2, the second network device is PE3, a third network device is PE1, and a fourth network device is ASBR1. A fault occurs on PE3 in a subsequent running process, and ASBR2 determines, according to an IGP protocol, that a fault occurs on PE3. To be specific, ASBR2 determines that a locator prefix network segment A1:1:3::/64 of PE3 is an unreachable route.

302. The first network device sends routing information to a third network device according to BGP, where the routing information indicates that the first route is unreachable, to enable the third network device to generate the first route and mark the first route as an unreachable route.

ASBR2 advertises the routing information to ASBR1 according to BGP, for example, may advertise the routing information to ASBR1 according to an EBGP protocol. The routing information indicates that A1:1:3::/64 is an unreachable route. ASBR2 may advertise the routing information to ASBR1 according to BGP in a plurality of different implementations. Descriptions are respectively provided below.

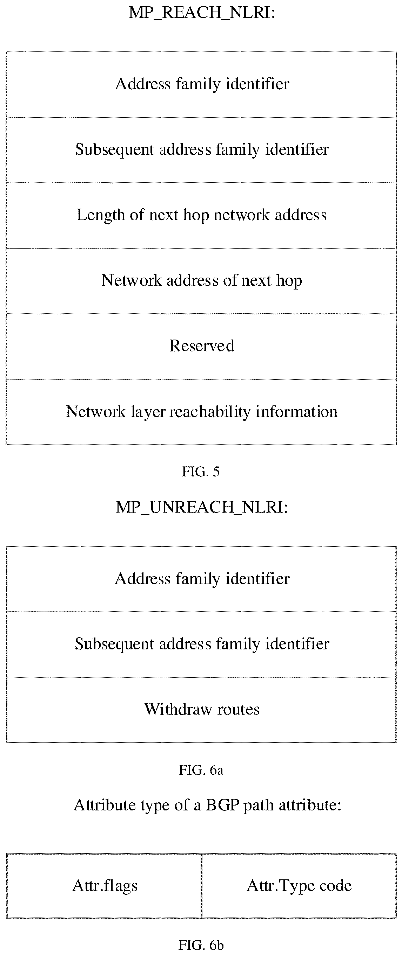

Manner 1. ASBR2 sends an update packet to ASBR1. Refer to FIG. 5. An MP_REACH_NLRI field in the update packet includes an address family identifier field, a subsequent address family identifier field, a length of next hop network address field, a network address of next hop, a reserved field, and a network layer reachability information field. The address family identifier field indicates a network layer protocol. For example, the field being 2 indicates an IPv6 protocol. The subsequent address family identifier field may be used together with the address family identifier field. For example, the subsequent address family identifier field being 1 indicates unicast, and the address family identifier being 2 indicates unicast in the IPv6 protocol. The length of next hop network address field indicates a length of a next hop address. The network address of next hop field is a next hop address. The reserved field is all 0s. The network layer reachability information field is a reachable route. A1:1:3::/64 above is carried in the network layer reachability information field, and a corresponding field in the update packet is extended. For example, identification information indicating unreachability is carried in the subsequent address family identifier field, to indicate that A1:1:3::/64 is an unreachable route.

Manner 2. ASBR2 sends an update packet to ASBR1. Refer to FIG. 6a. An MP_UNREACH_NLRI field in the update packet includes an address family identifier field, a subsequent address family identifier field, and a withdraw routes field. The address family identifier field indicates a network layer protocol. For example, the field being 2 indicates an IPv6 protocol. The subsequent address family identifier field may be used together with the address family identifier field. For example, the subsequent address family identifier field being 1 indicates unicast, and the address family identifier being 2 indicates unicast in the IPv6 protocol. The withdraw routes field is a route that needs to be withdrawn.

A1:1:3::/64 above is carried in the withdraw routes field, and identification information indicating unreachability is carried in the subsequent address family identifier field, to indicate that A1:1:3::/64 is an unreachable route.

Manner 3. ASBR2 sends an update packet to ASBR1. A1:1:3::/64 above is carried in a network layer reachability information field in an MP_REACH_NLRI field in the update packet, and for example, all-f indication information is carried in a network address of next hop field, to indicate that A1:1:3::/64 is an unreachable route.

Manner 4. A BGP path attribute includes an attribute type, an attribute length, and an attribute value. Refer to FIG. 6b. The attribute type includes two bytes, where the first byte is a flag bit (Attr.flags), and the second byte is a code bit (Attr.Type code). ASBR2 sends an update packet to ASBR1. A1:1:3::/64 above is carried in a network layer reachability information field in an MP_REACH_NLRI field in the update packet, and identification information indicating unreachability is carried in an attribute type field in a path attribute field in the update packet, to indicate that A1:1:3::/64 is an unreachable route.

Manner 5. ASBR2 sends an update packet to ASBR1. A1:1:3::/64 above is carried in a withdraw routes field in an MP_UNREACH_NLRI field in the update packet, and identification information indicating unreachability is carried in an attribute type field in a path attribute field in the update packet, to indicate that A1:1:3::/64 is an unreachable route.

Then, ASBR1 advertises the routing information to AS 100 according to the IGP protocol. For example, ASBR1 may flood an OSPF packet or an ISIS packet in AS100, and the routing information is carried in the foregoing packet, so that after receiving the routing information, PE1 stores A1:1:3::/64 and marks A1:1:3::/64 as an unreachable route. For example, PE1 may store A1:1:3::/64 in a public network routing table, and mark A1:1:3::/64 as an unreachable route. Alternatively, PE1 may store A1:1:3::/64 in a forwarding table, and mark A1:1:3::/64 as an unreachable route. Then, PE1 matches A1:1:3:B100/128 in the primary forwarding entry with A1:1:3::/64 in the public network routing table in a longest mask matching manner. In addition, because A1:1:3::/64 is an unreachable route, PE1 determines that a VPN SID in the primary forwarding entry does not have reachability. In addition, because an aggregated route still exists, and PE1 matches A1:1:4:B100/128 in the secondary forwarding entry with the aggregated route in a longest mask matching manner, PE1 determines that a VPN SID in the secondary forwarding entry has reachability. Therefore, PE1 switches an original primary forwarding entry to the secondary forwarding entry, and switches an original secondary forwarding entry to the primary forwarding entry. To be specific, when receiving a data packet whose destination address is 10.1.0.1124, PE1 encapsulates A1:1:4:B100/128 into a data packet, to successfully forward the data packet to CE2 via PE4.

In another scenario, ASBR1 does not exist in FIG. 3. Therefore, after determining that a locator prefix network segment of PE3 is unreachable, ASBR2 may directly send an update packet to PE1. The foregoing routing information is carried in the update packet. A carrying manner is similar to those described in Manner 1 to Manner 5. A manner in which PE1 generates a first route based on the routing information and marks the first route as an unreachable route and subsequent processing are similar to those described in step 302. Details are not described herein again.

In this application, because the third network device learns the aggregated route, if a fault occurs on the second network device, the third network device still considers, based on the aggregated route, that a forwarding entry advertised by the second network device for the private network route is available, resulting in a packet loss. Therefore, when the first network device determines that the first route of the second network device is an unreachable route, the first network device advertises, to the third network device, that the first route is an unreachable route, so that the third network device switches the foregoing forwarding entry from the primary forwarding entry to the secondary forwarding entry in a timely manner, to avoid the packet loss.

In another embodiment, this application may alternatively be applied to the scenario shown in FIG. 2. The following describes another procedure of the unreachable route advertisement method in this application.

C01. A first network device determines that a first route to a second network device is unreachable.

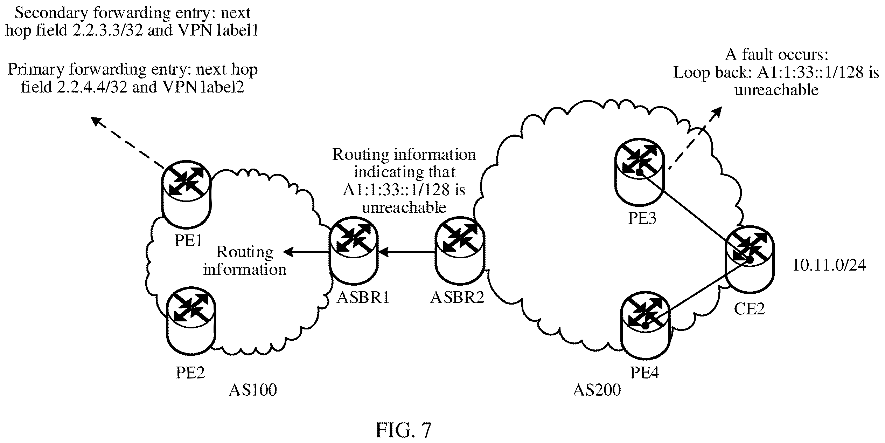

It should be noted that steps C01 and C02 in this embodiment are performed after PE1 learns forwarding information advertised by PE3 and PE4 for a private network route 10.1.1.0/24 of CE2 and generates a primary forwarding entry and a secondary forwarding entry, for example, after the foregoing steps B01 to B05. Based on FIG. 2, refer to FIG. 7. A fault occurs on PE3 in a subsequent running process. ASBR2 determines, according to an IGP protocol, that a fault occurs on PE3, and therefore, determines that a target prefix network segment used by PE3 to establish a BGP peer is an unreachable route. The target prefix network segment is, for example, a loop back address 2.2.3.3/32.

C02. The first network device sends routing information to a third network device according to BGP, where the routing information indicates that the first route is unreachable, to enable the third network device to generate the first route and mark the first route as an unreachable route.

ASBR2 advertises the routing information to ASBR1 according to BGP. The routing information indicates that 2.2.3.3/32 is an unreachable route. ASBR2 may advertise the routing information to ASBR1 according to BGP in a plurality of different implementations. Descriptions are respectively provided below.

Manner 1. ASBR2 sends an update packet to ASBR1. 2.2.3.3/32 above is carried in an NLRI field in an MP_REACH_NLRI field in the update packet, and identification information indicating unreachability is carried in a SAFI field in the MP_REACH_NLRI field, to indicate that 2.2.3.3/32 is an unreachable route.

Manner 2. ASBR2 sends an update packet to ASBR1. 2.2.3.3/32 above is carried in a withdraw routes field in an MP_UNREACH_NLRI field in the update packet, and identification information indicating unreachability is carried in a SAFI field in the MP_UNREACH_NLRI field, to indicate that 2.2.3.3/32 is an unreachable route.

Manner 3. ASBR2 sends an update packet to ASBR1. 2.2.3.3/32 above is carried in an NLRI field in an MP_REACH_NLRI field in the update packet, and for example, all-f indication information is carried in a network address of next hop field in the MP_REACH_NLRI field, to indicate that 2.2.3.3/32 is an unreachable route.

Manner 4. ASBR2 sends an update packet to ASBR1. 2.2.3.3/32 above is carried in an NLRI field in an MP_REACH_NLRI field in the update packet, and identification information indicating unreachability is carried in an attribute type field in a path attribute field in the update packet, to indicate that 2.2.3.3/32 is an unreachable route.

Manner 5. ASBR2 sends an update packet to ASBR1. 2.2.3.3/32 above is carried in a withdraw routes field in an MP_UNREACH_NLRI field in the update packet, and identification information indicating unreachability is carried in an attribute type field in a path attribute field in the update packet, to indicate that 2.2.3.3/32 is an unreachable route.

Then, ASBR1 advertises the routing information to AS100 according to the IGP protocol, so that after receiving the routing information, PE1 stores 2.2.3.3/32 and marks 2.2.3.3/32 as an unreachable route. For example, PE1 may store 2.2.3.3/32 in a public network routing table, and mark 2.2.3.3/32 as an unreachable route. Alternatively, PE1 may store 2.2.3.3/32 in a forwarding table, and mark 2.2.3.3/32 as an unreachable route. Then, PE1 matches 2.2.3.3/32 in the primary forwarding entry with 2.2.3.3/32 in the public network routing table in a longest mask matching manner. In addition, because 2.2.3.3/32 is an unreachable route, PE1 determines that 2.2.3.3/32 in the primary forwarding entry does not have reachability. In addition, because an aggregated route still exists, and PE1 matches 2.2.4.4/32 in the secondary forwarding entry with the aggregated route in a longest mask matching manner, PE1 determines that 2.2.4.4/32 in the secondary forwarding entry has reachability. Therefore, PE1 switches an original primary forwarding entry to the secondary forwarding entry, and switches an original secondary forwarding entry to the primary forwarding entry. To be specific, when receiving a data packet whose destination address is 10.1.0.1/24, PE1 encapsulates VPN label2 into a data packet, to successfully forward the data packet to CE2 via PE4.

In another scenario, ASBR1 does not exist in FIG. 7. Therefore, after determining that a target prefix network segment of PE3 is unreachable, ASBR2 may directly send an update packet to PE1. The foregoing routing information is carried in the update packet. A carrying manner is similar to those described in Manner 1 to Manner 5. A manner in which PE1 generates a first route based on the routing information and marks the first route as an unreachable route and subsequent processing are similar to those described in step C02. Details are not described herein again.

In this application, because the third network device learns the aggregated route, if a fault occurs on the second network device, the third network device still considers, based on the aggregated route, that a forwarding entry advertised by the second network device for the private network route is available, resulting in a packet loss. Therefore, when the first network device determines that the first route of the second network device is an unreachable route, the first network device advertises, to the third network device, that the first route is an unreachable route, so that the third network device switches the foregoing forwarding entry from the primary forwarding entry to the secondary forwarding entry in a timely manner, to avoid the packet loss.

The foregoing describes the method in this application, and the following describes an apparatus in this application.

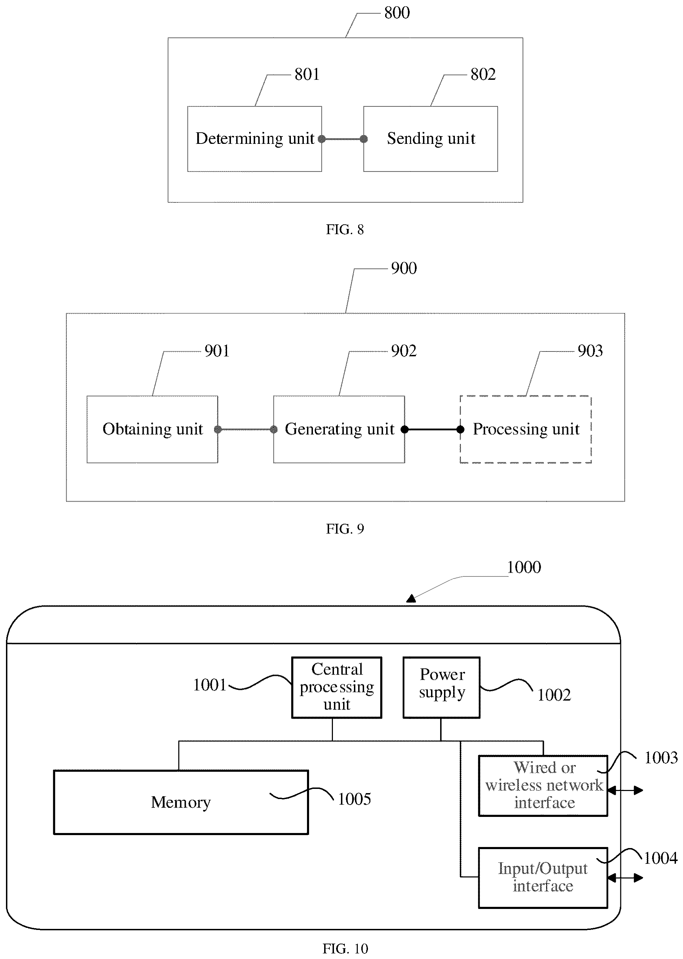

Refer to FIG. 8. A first network device 800 in this application includes a determining unit 801 and a sending unit 802. The first network device 800 is configured to perform a function performed by the first network device in the foregoing embodiments.

The determining unit 801 is configured to determine that a first route to a second network device is unreachable.

The sending unit 802 is configured to send routing information to a third network device according to BGP, where the routing information indicates that the first route is unreachable, to enable the second network device to generate the first route and mark the first route as an unreachable route.

In a possible implementation,
the sending unit 802 is specifically configured to send a BGP packet to the third network device, where the BGP packet carries the routing information.

In a possible implementation,
the sending unit 802 is specifically configured to send a BGP packet to a fourth network device, to enable the fourth network device to send an IGP packet to the third network device, where the BGP packet and the IGP packet carry the routing information.

In a possible implementation, the first network device and the fourth network device are autonomous system border routers ASBRs, and the second network device and the third network device are provider edge PE routers.

In a possible implementation, the BGP packet carries the first route and indication information, where the indication information indicates that the first route is unreachable.

In a possible implementation, the third network device generates an aggregated route, a network segment corresponding to the first route is a sub-network segment of a network segment corresponding to the aggregated route, and the first route is a locator prefix network segment or a target prefix network segment for establishing a BGP peer.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field.

In a possible implementation, the third network device generates the first route in a forwarding table, and marks the first route as unreachable in the forwarding table.

Refer to FIG. 9. A third network device 900 in this application includes an obtaining unit 901 and a generating unit 902.

The obtaining unit 901 is configured to obtain routing information sent by a first network device according to BGP, where the routing information indicates that a first route to a second network device is unreachable.

The generating unit 902 is configured to: generate the first route based on the routing information, and mark the first route as unreachable.

In a possible implementation, the first route is a locator prefix network segment, and the third network device further includes a processing unit 903.

The processing unit 903 is configured to: match the first route with a virtual private network segment identifier VPN SID in a forwarding entry advertised by the second network device for a private network route, and determine, based on the first route being unreachable, that the VPN SID is unreachable, to trigger an operation of switching the forwarding entry from a primary forwarding entry to a secondary forwarding entry.

In a possible implementation, the first route is a target prefix network segment for establishing a BGP peer, and the third network device further includes a processing unit 903.

The processing unit 903 is configured to: match the first route with the target prefix network segment in a forwarding entry advertised by the second network device for a private network route, and determine, based on the first route being unreachable, that the target prefix network segment is unreachable, to trigger an operation of switching the forwarding entry from a primary forwarding entry to a secondary forwarding entry.

In a possible implementation,
the obtaining unit 901 is specifically configured to obtain a BGP packet sent by the first network device, where the BGP packet carries the routing information.

In a possible implementation,
the obtaining unit 901 is specifically configured to obtain an IGP packet sent by a fourth network device, where the IGP packet is sent by the fourth network device based on a BGP packet from the first network device, and the IGP packet and the BGP packet carry the routing information.

In a possible implementation, the BGP packet carries the first route and indication information, where the indication information indicates that the first route is unreachable.

In a possible implementation, the BGP packet is an update packet, the update packet includes an MP_REACH_NLRI field, the first route is carried in an NLRI field in the MP_REACH_NLRI field, and the indication information is carried in a SAFI field in the MP_REACH_NLRI field.

In a possible implementation, the BGP packet is an update packet, the update packet includes an MP_UNREACH_NLRI field, the first route is carried in a withdraw field in the MP_UNREACH_NLRI field, and the indication information is carried in a SAFI field in the MP_UNREACH_NLRI field.

In a possible implementation, the BGP packet is an update packet, the update packet includes an MP_REACH_NLRI field, the first route is carried in an NLRI field in the MP_REACH_NLRI field, and the indication information is carried in a next hop field in the MP_REACH_NLRI field.

In a possible implementation, the BGP packet is an update packet, the update packet includes an MP_REACH_NLRI field, the first route is carried in an NLRI field in the MP_REACH_NLRI field, and the indication information is carried in an attribute type field in a path attribute in the update packet.

In a possible implementation, the BGP packet is an update packet, the update packet includes an MP_UNREACH_NLRI field, the first route is carried in an NLRI field in the MP_UNREACH_NLRI field, and the indication information is carried in an attribute type field in a path attribute in the update packet.

In a possible implementation, the third network device generates the first route in a forwarding table, and marks the first route as unreachable in the forwarding table.

FIG. 10 is a diagram of a structure of an apparatus according to this application. The apparatus may be a first network device or a third network device, and may include one or more central processing units (central processing units, CPUs) 1001 and a memory 1005. The memory 1005 stores one or more application programs or one or more pieces of data.

The memory 1005 may be a volatile storage or a persistent storage. The program stored in the memory 1005 may include one or more modules, and each module may include a series of instruction operations on a server. Further, the central processing unit 1001 may be configured to communicate with the memory 1005, and perform, on the apparatus 1000, the series of instruction operations in the memory 1005.

The apparatus 1000 may further include one or more power supplies 1002, one or more wired or wireless network interfaces 1003, one or more input/output interfaces 1004, and/or one or more operating systems.

The central processing unit 1001 may perform an operation of the first network device or the third network device in the foregoing embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and the parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A route advertisement method, comprising:
determining, by a first network device, that a first route to a second network device is unreachable; and
sending, by the first network device, routing information to a third network device according to BGP, wherein the routing information indicates that the first route is unreachable, to enable the third network device to generate the first route and mark the first route as an unreachable route.

2. The method according to claim 1, wherein sending, by the first network device, the routing information to the third network device according to BGP comprises:
sending, by the first network device, a BGP packet to the third network device, wherein the BGP packet carries the routing information.

3. The method according to claim 1, wherein sending, by the first network device, the routing information to the third network device according to BGP comprises:
sending, by the first network device, a BGP packet to a fourth network device, to enable the fourth network device to send an IGP packet to the third network device, wherein the BGP packet and the IGP packet carry the routing information.

4. The method according to claim 3, wherein the first network device and the fourth network device are autonomous system border routers ASBRs, and the second network device and the third network device are provider edge PE routers.

5. The method according to any one of claims 2 to 4, wherein that the BGP packet carries the routing information comprises:
the BGP packet carries the first route and indication information, wherein the indication information indicates that the first route is unreachable.

6. The method according to claim 5, wherein the third network device generates an aggregated route, a network segment corresponding to the first route is a sub-network segment of a network segment corresponding to the aggregated route, and the first route is a locator prefix network segment or a target prefix network segment for establishing a BGP peer.

7. The method according to claim 6, wherein the BGP packet is an update packet, the update packet comprises an MP_REACH_NLRI field, the first route is carried in an NLRI field in the MP_REACH_NLRI field, and the indication information is carried in a SAFI field in the MP_REACH_NLRI field.

8. The method according to claim 6, wherein the BGP packet is an update packet, the update packet comprises an MP_UNREACH_NLRI field, the first route is carried in a withdraw field in the MP_UNREACH_NLRI field, and the indication information is carried in a SAFI field in the MP_UNREACH_NLRI field.

9. The method according to any one of claims 1 to 8, wherein that the third network device generates the first route and marks the first route as an unreachable route comprises:
generating, by the third network device, the first route in a forwarding table, and marking the first route as an unreachable route in the forwarding table.

10. A route advertisement method, comprising:
obtaining, by a third network device, routing information sent by a first network device according to BGP, wherein the routing information indicates that a first route to a second network device is unreachable; and
generating, by the third network device, the first route based on the routing information, and marking the first route as unreachable.

11. The method according to claim 10, wherein the first route is a locator prefix network segment; and
the method further comprises:
matching, by the third network device, the first route with a virtual private network segment identifier VPN SID in a forwarding entry advertised by the second network device for a private network route, and determining, based on the first route being unreachable, that the VPN SID is unreachable, to trigger an operation of switching the forwarding entry from a primary forwarding entry to a secondary forwarding entry.

12. The method according to claim 10, wherein the first route is a target prefix network segment for establishing a BGP peer; and
the method further comprises:
matching, by the third network device, the first route with the target prefix network segment in a forwarding entry advertised by the second network device for a private network route, and determining, based on the first route being unreachable, that the target prefix network segment is unreachable, to trigger an operation of switching the forwarding entry from a primary forwarding entry to a secondary forwarding entry.

13. The method according to any one of claims 10 to 12, wherein obtaining, by the third network device, the routing information sent by the first network device according to BGP comprises:
obtaining, by the third network device, a BGP packet sent by the first network device, wherein the BGP packet carries the routing information.

14. The method according to any one of claims 10 to 12, wherein obtaining, by the third network device, the routing information sent by the first network device according to BGP comprises:
obtaining, by the third network device, an IGP packet sent by a fourth network device, wherein the IGP packet is sent by the fourth network device based on a BGP packet from the first network device, and the IGP packet and the BGP packet carry the routing information.

15. The method according to claim 13 or 14, wherein that the BGP packet carries the routing information comprises:
the BGP packet carries the first route and indication information, wherein the indication information indicates that the first route is unreachable.

16. The method according to claim 15, wherein the BGP packet is an update packet, the update packet comprises an MP_REACH_NLRI field, the first route is carried in an NLRI field in the MP_REACH_NLRI field, and the indication information is carried in a SAFI field in the MP_REACH_NLRI field.

17. The method according to claim 15, wherein the BGP packet is an update packet, the update packet comprises an MP_UNREACH_NLRI field, the first route is carried in a withdraw field in the MP_UNREACH_NLRI field, and the indication information is carried in a SAFI field in the MP_UNREACH_NLRI field.

18. The method according to any one of claims 10 to 17, wherein generating, by the third network device, the first route based on the routing information, and marking the first route as unreachable comprises:
generating, by the third network device, the first route in a forwarding table based on the routing information, and marking the first route as unreachable in the forwarding table.

19. A network device, used as a first network device and comprising a functional unit configured to implement the method according to any one of claims 1 to 9.

20. A network device, used as a third network device and comprising a functional unit configured to implement the method according to any one of claims 10 to 18.

21. A network device, used as a first network device and comprising a processor, wherein the processor is coupled to a memory, the memory is configured to store instructions, and when the instructions are executed by the processor, the network device is enabled to perform the method according to any one of claims 1 to 9.

22. A network device, used as a third network device and comprising a processor, wherein the processor is coupled to a memory, the memory is configured to store instructions, and when the instructions are executed by the processor, the network device is enabled to perform the method according to any one of claims 10 to 18.

23. A computer-readable storage medium, wherein the computer-readable storage medium stores a computer program or instructions, and when the computer program or the instructions are executed, a computer is enabled to perform the method according to any one of claims 1 to 18.

24. A computer program product, wherein the computer program product comprises computer program code, and when the computer program code is run on a computer, the computer is enabled to implement the method according to any one of claims 1 to 18.
